# EUROPÄISCHE PATENTANMELDUNG

(11) **EP 0 572 798 A2**
(43) Veröffentlichungstag der Anmeldung: **08.12.1993**
(21) Anmeldenummer: 93106867.0
(22) Anmeldetag: 28.04.1993
(51) Int. Cl.: G01B 11/00, G01B 11/24, A61C 19/04, A61C 13/00

(54) **Vorrichtung zum berührungslosen Vermessen eines dreidimensionalen Objektes**

(30) Priorität: 03.06.1992 DE 4218219
(71) Anmelder: Geyer Medizin- und Fertigungstechnik GmbH, D-10961 Berlin (DE)
(72) Erfinder: Weise, Thomas, W-1000 Berlin 61 (DE); Rubbert, Rüdger, W-1000 Berlin (DE)
(74) Vertreter: Weber, Dieter, Dr.

(57) **Zusammenfassung**

Beschrieben wird eine Vorrichtung zum berührungslosen, räumlichen Vermessen eines schlecht zugänglichen, dreidimensionalen Objektes (9) auf optischem Wege unter Erstellung von flächigen Aufnahmen, mit einer optischen Strahlquelle, einer Aufnahmeeinheit (10, 11) zur Aufzeichnung von optischen Strahlen (15, 18, 19, 25) und einer Auswerteeinheit zur Auswertung der durch die optischen Strahlen übermittelten Informationen.

Um die Möglichkeit vorzusehen, Objekte auch in engen Räumen berührungslos, vorzugsweise räumlich exakt zu messen und die Daten der Meßergebnisse aufzuzeichnen, ist erfindungsgemäß vorgesehen, daß ein Träger (4) auf wenigstens einer Führungseinrichtung (2) relativ zum Objekt (9) auf einer Führungsbahn (3) gegenüber dem Grundgestell (1) bewegbar ist, der Träger (4) auf der Führungseinrichtung (2) mit Hilfe eines Motors (7) verfahrbar ist, eine Umlenkeinrichtung (12, 13, 13') am Träger (4) derart befestigt ist, daß wenigstens ein vom Objekt reflektierter Strahl (18, 19, 25; 18', 19', 25') zur Aufnahmeeinheit (10, 11) gelenkt wird, Position und Richtung des Grundgestells (1) zum Objekt (9) zu jedem Zeitpunkt eindeutig bestimmt ist, die Position und Ausrichtung des Trägers (4) gegenüber dem Grundgestell (1) zu jedem Zeitpunkt eindeutig bestimmt ist, die Auswerteeinheit (11a) Einrichtungen zur Speicherung der Informationen der vom Objekt (9) reflektierten Strahlen (18', 19', 25') in Form von Bildpunkten, -linien und/oder Bildflächen aufweist und daß die Auswerteeinheit (11a) Einrichtungen aufweist zur Verarbeitung der gespeicherten Bildinformationen.

## Beschreibung

Die Erfindung betrifft eine Vorrichtung zum berührungslosen Vermessen eines schlecht zugänglichen, dreidimensionalen Objektes auf optischem Wege unter Erstellung von flächigen Aufnahmen, mit einer optischen Strahlquelle, einer Aufnahmeeinheit zur Aufzeichnung von optischen Strahlen und einer Auswerteeinheit zur Auswertung der durch die optischen Strahlen übermittelten Informationen.

Es ist bekannt, Objekte einerseits mechanisch auf klassische Weise und andererseits auch optisch zu vermessen, z.B. durch Erstellen von 3-D-Aufnahmen. Hier sind zur räumlichen Erfassung der Objekte unter anderem das Lichtschnittverfahren und das Stereo-Aufnahme-Verfahren bekannt. Die Vermessung mit derartigen optischen Vorrichtungen hat den Nachteil, daß das auszumessende Objekt ausreichend optisch zugänglich sein muß, d.h. die zu vermessenden Flächen direkt sichtbar sein müssen.

Es gibt aber zahlreiche Gegebenheiten, bei denen die Zugänglichkeit des auszumessenden Objektes so ungünstig ist, daß eine direkte Sichtbarkeit des Objektes, zumindest aus dem zum Vermessen erforderlichen Blickwinkel, nicht gegeben ist. Der Grund liegt zumeist in der räumlichen Beschränkung für die Meßvorrichtung, so daß mit anderen Worten der Raum um das zu vermessende Objekt so klein ist, daß weder die Meßvorrichtung noch eine ausreichend große Optik mit Umlenkspiegeln und dergleichen zur Durchführung der Vermessung angeordnet bzw. untergebracht werden können.

Ein solches Beispiel ist die Zahntechnik, bei welcher für kieferorthopädische Zwecke die Ausmessung eines Gebisses durchgeführt werden soll, wenn z.B. Zahn-Fehlstellungen mit Hilfe der "Edge-Wise-Drahtbogen-Technik" korrigiert werden sollen. Hierbei werden auf die Zähne Halteelemente (sogenannte Brackets) aufgeklebt, mit denen ein Drahtbogen befestigt wird. Dieser wird so geformt, daß er auf die Brackets und damit auf die Zähne die erforderlichen Korrekturkräfte und -momente ausübt. Zur Einstellung der richtigen Kräfte und Momente muß der Drahtbogen richtig eingestellt werden, und zwar für jeden Patienten bei jeder Behandlungsstufe individuell ein speziell angefertigter Drahtbogen. Es ist dabei schon vorgeschlagen worden, computergesteuerte Biegemaschinen zur Erstellung der richtig geformten Drahtbögen einzusetzen. Hierzu müssen zumindest die Raumkoordinaten der Brackets exakt bekannt sein. Für den Behandler wären außerdem genaue Daten über die Kauflächen der Zähne hilfreich, denn das Ziel der Zahnkorrektur besteht im Erreichen einer Zahnstellung, bei welcher die Kauflächen der entsprechenden Zähne des Ober- und Unterkiefers korrekt zueinander stehen.

Der Erfindung liegt daher die Aufgabe zugrunde, eine Vorrichtung zum Vermessen der eingangs genannten Art zu schaffen, mit der es möglich ist, Objekte auch in engen Räumen berührungslos, räumlich exakt zu messen und die Daten der Meßergebnisse aufzuzeichnen.

Diese Aufgabe wird erfindungsgemäß dadurch gelöst, daß
a) ein Träger auf wenigstens einer Führungseinrichtung relativ zum Objekt auf einer Führungsbahn gegenüber dem Grundgestell bewegbar ist;
b) der Träger auf der/den Führungseinrichtung/en mit Hilfe wenigstens eines Aktuators verfahrbar ist;
c) wenigstens eine Umlenkeinrichtung an dem Träger derart befestigt ist, daß wenigstens ein vom Objekt reflektierter optischer Strahl zur Aufnahmeeinheit gelenkt wird;
d) Position und Richtung des Grundgestells zum Objekt zu jedem während der Aufnahme relevanten Zeitpunkt eindeutig bestimmt ist;
e) die Position und Ausrichtung des Trägers gegenüber dem Grundgestell zu jedem während der Aufnahme relevanten Zeitpunkt eindeutig bestimmt ist;
f) die Auswerteeinheit Einrichtungen zur Speicherung der Informationen der vom Objekt reflektierten Strahlen in Form von Bildpunkten und/oder Bildlinien und/oder Bildflächen aufweist; und
g) die Auswerteeinheit Einrichtungen zur Verarbeitung der gespeicherten Bildinformation aufweist.

Neben dem zu vermessenden Objekt ist nahezu immer im Abstand von seinen Oberflächen ein kleiner Raum vorhanden, der von außen durch eine Öffnung sichtbar ist. Ordnet man in diesem Raum eine Umlenkeinrichtung für am Objekt reflektierte Strahlen an, dann kann man diese zu einer Aufnahmeeinheit lenken und dort erfassen. Bislang bestand die Schwierigkeit, daß das Objekt nicht vollständig mit z.B. einem einzigen Spiegel ausgeleuchtet und/oder erfaßt werden konnte, so daß auch spezielle optische Verfahren zur räumlichen Vermessung nicht eingesetzt wurden. Dieses Problem überwindet die Erfindung dadurch, daß ein relativ zum Objekt bewegbarer Träger verwendet wird, an dem eine Umlenkeinrichtung befestigt ist, mit der die Strahlen zu einer Aufnahmeeinheit gelenkt werden, wo die Daten gespeichert und zur Erstellung der gesuchten räumlichen Daten ausgewertet werden können. Dabei ist allerdings auch erforderlich, daß der Ort der Umlenkeinrichtung bezüglich des Objektes in jedem Augenblick der Messung bzw. in jeder Position des Trägers exakt bekannt ist. Hierfür kann man an sich bekannte Meßeinrichtungen verwenden oder die Aufgabe konstruktiv lösen.

Der bewegliche Träger wird erfindungsgemäß exakt geführt und trägt eine fest eingestellte oder einstellbare Umlenkeinrichtung. Die Vorrichtung kann zur Durchführung verschiedener Meßmethoden verwendet werden, wobei als Strahlquelle im allgemeinen eine Lichtquelle für sichtbares Licht verwendet wird, in einem später beschriebenen Sonderfall sogar eine das Objekt allgemein von außen erhellende Strahlquelle verwendet werden kann.

Die Erfindung geht von der Überlegung aus, daß die Umlenkeinrichtung aufgrund der räumlichen Verhältnisse neben dem Objekt gegebenenfalls auch nur einen Teilbereich des zu vermessenden Objektes erfassen kann und erfaßt und mittels der Bewegung des Trägers, in Einzelschritten oder kontinuierlich, so über die zu vermessende Objektoberfläche verfahren wird, daß mehrere Teilbereiche abgetastet und vermessen werden mit dem Ergebnis von Teildatenbereichen oder Teilbildern, die man dann ohne weiteres zusammensetzen kann und aus denen man gegebenenfalls eine räumliche Darstellung des Objektes zusammensetzen kann. Dabei muß darauf geachtet werden, daß die Position der Führungseinrichtung relativ zu dem zu vermessenden Objekt stes bekannt ist. Man kann eine starre Koppelung oder feste Verbindung vorsehen, die Koppelung kann aber auch aus einem formschlüssigen Aneinandersetzen ohne direkte Verbindung bestehen. Es muß nur stets der genaue Ort des Trägers über seine Führungseinheit zum Objekt meßbar und bekannt sein.

Die Auswerteeinheit ist mit den erfindungsgemäßen Maßnahmen in der Lage, die Daten oder Teilbilder komplett zu speichern und mit Hilfe der Ortsbestimmung der Umlenkeinrichtung bezüglich des Objektes (mit Hilfe der erwähnten Meßeinrichtungen) anschließend auszuwerten. Man kann auch bereits direkt im Anschluß an die Aufnahme der Informationen bzw. Daten eine Vorauswertung vornehmen, um die abzuspeichernde Datenmenge zu reduzieren.

Durch die definierte Bewegung der Umlenkeinrichtung über ein zu vermessendes Objekt ist es mit Vorteil nicht notwendig, die gesamte zu vermessende Länge des gesamten Objektes zu vermessen, denn der Träger kann über die Länge des Objektes fahren und nacheinander die Teilbereiche vermessen. Das gleiche gilt für die zu vermessende Breite, die nicht in ihrer Gesamtheit durch eine einzige Messung erfaßt werden muß. Vielmehr können auch hier schmalere Segmente des Objektes aufgenommen werden, die anschließend zu einem Gesamtbild zusammengesetzt werden, wenn ein Gesamtbild erwünscht ist.

Je nach Anwendungsfall ist es möglich, die Aufnahmeeinheit(en) und/oder die Strahlquelle(n), sofern letztere zur Erzeugung gerichteter Strahlen erforderlich ist/sind, unbeweglich, also nicht auf dem Träger mitfahrend anzuordnen. Diese Ausführungsvariante ist bewußt durch die Erfindung erfaßt, wenngleich bei der Beschreibung bevorzugter Ausführungsformen von einem solchen Anwendungsfall ausgegangen wird, bei welchem die Aufnahmeeinheit und die Strahlquelle mitfahren.

Weil es sich bei der erfindungsgemäßen Vorrichtung um eine flächige (zweidimensionale) Vermessung des Objektes handelt, auch bei der sogenannten 3D-Vermessung, bei der letztlich zwei (oder mehrere) flächige Aufnahmen aufgenommen werden, die gemeinsam ausgewertet werden, kann man auch nur die flächige Vermessung eines schwer zugänglichen Objektes vornehmen.

Die eindeutige Bestimmung von Position und Richtung des Grundgestells zum Objekt kann erreicht werden
- durch starre Kopplung zwischen Objekt und Grundgestell oder
- durch Vermeidung von Relativbewegungen zwischen Objekt und Grundgestell oder
- durch Kenntnis der Relativbewegungen zwischen Objekt und Grundgestell oder
- durch Meßeinrichtungen für die Bestimmung der Position und Richtung des Grundgestells zum Objekt.

Die Bestimmung der Position und Ausrichtung des Trägers gegenüber dem Grundgestell wird bestimmt
- durch eindeutige Steuerung des/der Aktuators/en oder
- durch Meßeinrichtungen für die exakte Bestimmung der Position und Ausrichtung des Trägers gegenüber dem Grundgestell. Derartige Meßeinrichtungen weisen beispielsweise ein in einem Servomotor integriertes Meßsystem auf, wobei der Aktuator ein Motor, z.B. rotative oder lineare, elektrische, pneumatische, hydraulische Motoren, z.B. Linearschrittmotor, sein kann.

Wenn die gespeicherten Bildinformationen durch die Auswerteeinheit verarbeitet werden, werden die Informationen des zeitlichen Verlaufs von Position und Ausrichtung der Umlenkeinrichtung gegenüber dem Objekt bewertet. Diese Position bildet sich aus der Information der Position und Richtung des Grundgestells zum Objekt und der Position und Ausrichtung des Trägers gegenüber dem Grundgestell. Insofern können die Informationen der flächigen Aufnahme des wenigstens einen Bildes des Objektes bereitgestellt werden, die sich aus den vom Objekt reflektierten optischen Strahlen beim Bewegen der Umlenkeinheit relativ zum Objekt ergeben.

Für die Meßeinrichtungen zur Bestimmung der Position des Trägers und der bewegten (oszillierenden oder rotierenden) Spiegel, falls nicht deren Position durch eine Steuerstrecke ohnehin bekannt ist, können lineare oder rotative Sensoren verwendet werden. Zweckmäßig ist es erfindungsgemäß ferner, wenn die Führungsbahn geradlinig als verdrehgesicherte Linearführung und der Träger als Linearschlitten ausgebildet ist. Dann ergeben sich für Antrieb und Messung besonders einfache Bedingungen. Alternativ kann man erfindungsgemäß aber auch die Führungsbahn kreisförmig und den Träger als Schwenkklappe ausbilden.

Eine besondere Ausführungsform erzeugt einen Lichtpunkt mit Hilfe des gerichteten Strahles:Hier handelt es sich um die Lichtpunktprojektion; ein anderes Verfahren erzeugt entsprechend eine Linie: Es handelt sich um das Lichtschnittverfahren; und eine weitere andere Ausführungsform dient der Erstellung flächiger Bilder: Dort handelt es sich um das Stereo-Aufnahme-Verfahren. Für die Lichtpunktprojektion ist es vorteilhaft, wenn der optische Strahl in wenigstens einer Ebene zur Punktabtastung oszillierend verschwenkbar ist. Voraussetzung hierfür ist die Verwendung einer Strahlquelle, die gerichtete optische Strahlen aussenden kann. Vorzugsweise ist diese Strahlquelle ebenso wie die Aufnahmeeinheit im Abstand von der Umlenkeinrichtung am Träger befestigt, es ist aber möglich, Strahlquelle und auch Aufnahmeeinheit ortsfest außerhalb des Trägers anzubringen. Der optische Strahl wird im allgemeinen ein Lichtstrahl sein, und die Strahlquelle im allgemeinen eine Lichtquelle. Sie ist erfindungsgemäß so ausgestaltet, daß ein gerichteter Strahl erzeugt wird, mit dessen Hilfe auf dem Objekt z.B. ein Lichtpunkt abgebildet wird. Mittels einer Kamera an der Aufnahmeeinheit, die sich in einem bestimmten Abstand zur Strahlquelle befindet, wird dieser Punkt auf der Bildebene vermessen. Der Strahl kann durch seine Verschwenkbarkeit die Objektoberfläche zeilenweise abtasten, denn er wird beispielsweise in Zeilenrichtung oszilliert. Stellt man sich die Bewegung des Trägers schrittweise vor, dann erfolgt die erste Abtastung in der ersten Zeile, die nächste Abtastung in der nächsten Zeile, weil sich der Träger um eine Zeile weiterbewegt hat usw., bis alle Zeilen durchfahren sind, so daß auch spaltenweise Punkte vorliegen. Mit Hilfe dieser Lichtpunktprojektion kann man die erfindungsgemäße Vorrichtung also verwenden, um zeilen- und spaltenweise abgetastete Oberflächen des Objektes mit Daten zu erfassen, aus denen sich die Raumkoordinaten des angeleuchteten Objektpunktes errechnen lassen. Dabei ist es wichtig,
1. den bekannten Winkel des projizierenden optischen Strahls zur Kamera,
2. den Abstand zwischen Strahlquelle und Kamera und
3. den sich durch die Auswertung des aufgenommenen Bildes gemessenen Winkel zwischen dem projizierenden Punkt und der Strahlquelle
zu erfassen und auszuwerten. Auf diese Weise kann die gesamte zu vermessende Oberfläche des Objektes durch den Strahl zeilen- und spaltenweise abgetastet werden.

Bei weiterer vorteilhafter Ausgestaltung der Erfindung ist vorgesehen, daß mindestens eine weitere Umlenkeinheit vorgesehen ist für das oszillierende Ablenken des vom Objekt reflektierten optischen Strahles in eine weitere Raumrichtung und für das Projizieren desselben in die Aufnahmeeinheit. Damit kann man mit einer punktförmigen Aufnahmeeinheit pro Position und Ausrichtung der ersten Umlenkeinheit zeilenförmige Bildinformationen aufnehmen. Mit einer zeilenförmigen Aufnahmeeinheit kann man pro Position und Ausrichtung der ersten Umlenkeinheit flächige Bildinformationen erhalten.

Vorteilhaft ist es erfindungsgemäß ferner, wenn ein Drehspiegel vorgesehen ist zur Umlenkung des vom Objekt reflektierten optischen Strahles und wenn der Drehspiegel am Träger derart befestigt ist, daß die Drehachse des Drehspiegels orthogonal (rechtwinklig) zur Bewegungsrichtung des Trägers liegt. Über Spiegel kann man einen optischen Strahl mit sehr geringer Divergenz und geringem Durchmesser auf das Objekt projizieren, und wenn ein Drehspiegel zwischengeschaltet ist, der vorzugsweise mehrere unter Winkeln zueinander angeordnete Spiegelebenen aufweist, dann kann man diese Spiegelflächen so auslegen, daß der optische Strahl die gesamte zu vermessende Objektbreite bestreicht. Dabei ist es zweckmäßig, den Drehspiegel mittels eines Schrittmotors oder eines Servomotors so anzutreiben, daß die jeweils aktuelle Winkelstellung des Drehspiegels in Form von Meßdaten vorliegt. Damit ist auch bekannt, an welcher Stelle der Zeile die Abtastung der Objektoberfläche gerade stattfindet.

Man kann auch andere Antriebe für den Drehspiegel einsetzen, sofern nur die Winkelstellung bekannt ist, die z.B. auch funktionsgemäß bestimmt werden kann, beispielsweise beim Sperrklinkenantrieb, oder über einen geeigneten Sensor ermittelt werden kann, z.B. einen Drehgeber.

Alternativ kann man die Drehbewegung des Drehspiegels auch durch eine mechanische Koppelung mit der Bewegung des Trägers erreichen. Eine solche Koppelung kann z.B. durch eine an der Trägerführung angeordnete, nicht mitfahrende Zahnstange verwirklicht werden, in die ein im Träger gelagertes Zahnrad eingreift, welches über ein Getriebe den Drehspiegel antreibt.

Als Aufnahmeeinheit kann man auch CCD-Flächen-Chips oder CCD-Zeilen-Chips verwenden. Anstelle des Einsatzes eines Drehspiegels, wie vorstehend erwähnt, kann man bei einer anderen Ausführungsform auch mit einem Flächenchip arbeiten, wobei dann die Notwendigkeit entfällt, die Winkelstellung des Drehspiegels zu kennen, da dieser nur noch der seitlichen Auslenkung des Beleuchtungsstrahls dient und diese Auslenkung auf dem Chip erkennbar ist.

Alternativ zu dem beschriebenen Drehspiegel könnte man auch einen oszillierenden Spiegel verwenden.

Für das räumliche Vermessen des dreidimensionalen Vermessens ist es erfindungsgemäß besonders zweckmäßig, wenn
a) wenigstens eine Umlenkeinrichtung für wenigstens zwei unter einem Winkel zueinander vom Objekt reflektierte Strahlen vorgesehen ist,
b) wenigstens eine Aufnahmeeinheit vorgesehen ist, welche die Informationen aus den wenigstens zwei getrennten Strahlen an die Auswerteeinheit übermittelt und
c) die Auswerteeinheit Einrichtungen zur Bildung einer 3D-Information aus wenigstens zwei flächigen Aufnahmen aufweist.

Wenn nur eine Aufnahmeeinheit vorhanden ist, kann beispielsweise die Umlenkeinrichtung schwenkbar sein, so daß die unter einem Winkel zueinander vom Objekt reflektierten Strahlen zeitlich nacheinander zur Aufnahmeeinheit gelenkt werden.

Erfindungsgemäß kann es andererseits sehr vorteilhaft sein, wenn beim Vorhandensein nur einer Aufnahmeeinheit diese in der Höhe und/oder im Winkel beweglich einstellbar ist. Dann nämlich kann die Einrichtung in die richtige Stellung gebracht werden, um den gewünschten und von der Umlenkeinrichtung projizierten Strahl aufzunehmen.

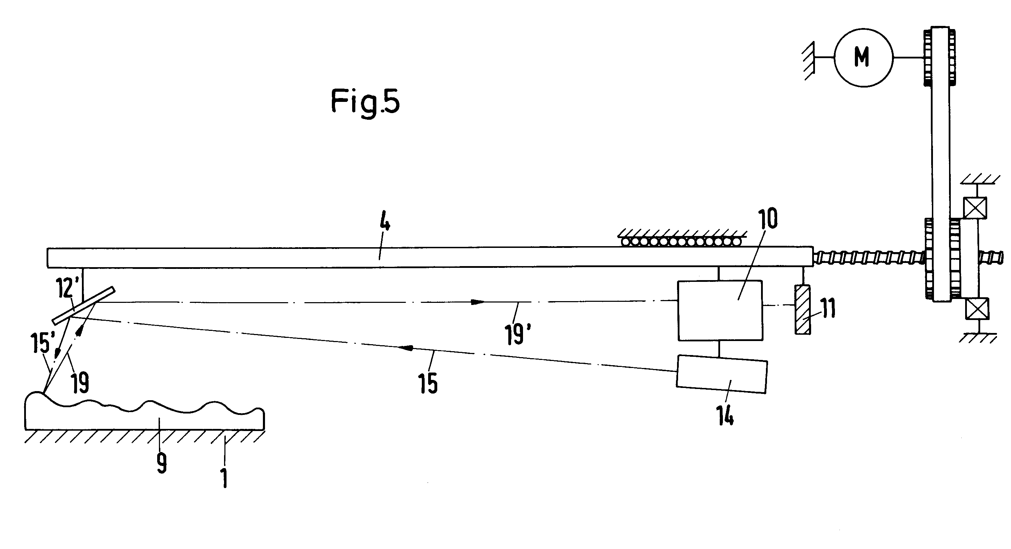

3D-Informationen kann man auf zwei Arten erhalten:
- durch Aufnehmen einer zweiten Draufsicht unter einem anderen Winkel. Die sich ergebenden zwei Aufsichten können sowohl gleichzeitig als auch nacheinander (oder intermittierend) erzeugt werden.
   Bei dem nicht gleichzeitigen Aufnehmen kann die Umlenkoptik z.B. nach der ersten Meßfahrt um den erforderlichen Winkel geschwenkt werden, so daß nur eine einzige Spiegelfläche notwendig ist.
- Alternativ kann man die Umlenkeinrichtung mit den zwei Spiegeln verwenden, dafür die Aufnahmeeinheit in der Höhe verfahren. Dann reicht eine Aufnahmeeinheit mit einem Zeilenchip aus.
   Bei einer anderen Ausführungsform könnte man die eine Aufnahmeeinheit derart verschwenken, daß die Strahlen in unterschiedlichen Winkeln auf den Spiegel fallen bzw. der beleuchtende Strahl unter einem anderen Winkel reflektiert wird als der von der Oberfläche reflektierte Strahl. Dann ist nur eine Spiegelfläche notwendig. Das wird später anhand Figur 5 erläutert.
   Bei einer weiteren anderen Ausführungsform kann man die Umlenkeinheit mit vier Planspiegeln versehen und eine Zeilenkamera einsetzen, die in vier unterschiedliche Höhenpositionen gefahren werden kann.

Für das Lichtschnittverfahren kann man einen in einer Ebene aufgeweiteten Lichtstrahl vorsehen, der nach linienförmiger Reflexion am Objekt über wenigstens einen am Träger befestigten. Planspiegel in die eine Flächenkamera aufweisende Aufnahmeeinheit gerichtet wird. Dadurch wird das oszillierende Verschwenken des optischen Strahles und damit das "Abfahren" der Zeile durch den Strahl umgangen. Durch die Aufweitung des Strahls in der Zeilenebene kann aus der Sicht der Strahlquelle eine dünne, gerade Linie auf das objekt projiziert werden. Wenn der Ort der Kamera, vorzugsweise einer Flächenkamera, sich außerhalb der Aufweitungsebene des Strahls befindet, können für jeden von der Linie angeleuchteten Punkt - also für eine komplette Zeile - die Raumkoordinaten in ähnlicher Weise bestimmt werden, wie vorstehend für das Lichtpunktprojektionsverfahren beschrieben.

Bei der Verwendung dieses Lichtschnittverfahrens und der Vorrichtung mit dem aufgeweiteten optischen Strahl, der vorzugsweise ein Lichtstrahl ist, können alle diejenigen Punkte, die für die relevanten Strahlengänge optisch zugänglich sind, vermessen werden, so daß für die Auswertung eine hohe Datenmenge zur Verfügung steht.

Beim Lichtschnittverfahren wird auf die Objektoberfläche eine gerade Linie projiziert, die aus der Sicht der Aufnahmeeinheit (abhängig von den Höhenunterschieden der Oberfläche) mehr oder weniger stark gekrümmt erscheint. Entsprechend ist beim Punktprojektionsverfahren die Auslenkung des Punktes aus Sicht der Aufnahmeeinheit mehr oder weniger stark.

Bei Verwendung einer einzigen Umlenkeinheit (d.h. keine getrennte Verfahrbarkeit) für gerichtete Beleuchtung und Aufnahme wird die Spiegelfläche für die Aufnahmestrahlen vorteilhaft so groß (hoch) gewählt, daß die entstehende Auslenkung der Linie oder des Punktes vollständig sichtbar ist.

Sollte diese Auslenkung aufgrund der Höhenunterschiede der zu vermessenden Fläche sehr groß sein und damit die Höhe des Umlenkspiegels zu groß werden, bietet es sich an, die beiden Umlenkeinheiten für gerichtete Beleuchtung und Aufnahme getrennt verfahrbar zu gestalten. Dabei würde die Umlenkeinheit für die Beleuchtung in den bestimmten kleinen Schritten verfahren, und bei jeder neuen Position dieser Einheit würde die Umlenkeinheit für die Aufnahme (wiederum in Einzelschritten) um einen solchen Weg verfahren, daß die gesamte notwendige Oberfläche bestrichen wird. Zum einen kann die Aufnahmeeinheit dann als Zeilenkamera ausgeführt werden, zum anderen kann die Höhe des Aufnahmespiegels reduziert werden.

Erfindungsgemäß ist es dabei vorteilhaft, eine Einrichtung vorzusehen zur Ausbildung der von der wenigstens einen Strahlquelle zum Objekt gerichteten optischen Strahlen für die Erzeugung von zusätzlichen Informationen bei der Auswertung der Aufnahmen. Dadurch können die Strahlen eine punktförmige und/oder linienförmige und/oder einem beliebigen Muster entsprechende Ausbildung erhalten.

Zweckmäßig ist erfindungsgemäß auch die Verwendung einer weiteren Umlenkeinheit zur Umlenkung des optischen Strahles in wenigstens einer Ebene.

Es ist generell jeweils getrennt für die gerichtete Beleuchtung als auch für die Aufnahmeeinheit möglich, mit Hilfe einer bewegten Umlenkeinrichtung (rotativ, translatorisch oder freie Kinematik) den Strahlengang im zeitlichen Verlauf schrittweise oder kontinuierlich um eine weitere Raumkoordinate (Dimension) aufzuweiten respektive abzutasten. Es ist also z.B. möglich, mittels eines oszillierenden Spiegels mit einer Punktstrahlquelle eine Linie abzutasten oder entsprechend auch mit einer Aufnahmeeinheit für nur einen Punkt (z.B. Fotodiode) eine Linie aufzunehmen. Das gilt vom Punkt zur Linie genauso wie von der Linie zur Fläche. Wichtig ist nur, daß Position und Ausrichtung der Umlenkeinheit zum jeweiligen relevanten Zeitpunkt bestimmt ist. Aus einer Kombination von zwei Umlenkeinheiten kann, sofern deren Freiheitsgrade nicht linear voneinander abhängig sind, ein einzelner Punkt auf eine Fläche projiziert werden.

Wünscht man eine Verkürzung der Erfassung und Auswertung von Daten und genügt die Erfassung einer Objektoberfläche nur nach einem groberen Raster, bei dem nur markante Punkte einer Objektoberfläche vermessen werden, dann bietet sich das Stereo-Bildverfahren an. Hierfür werden wenigstens zwei Teilbilder erzeugt. Beispielsweise kann die Umlenkeinrichtung für wenigstens zwei, unter einem Winkel zueinander und zum Objekt gerichtete, vom Objekt reflektierte Strahlen vorgesehen sein, und die Aufnahmeeinheit weist Einrichtungen für die getrennte Speicherung und Auswertung der aus den zwei getrennten Strahlen erzeugten wenigstens zwei Teilbilder auf. Für das Stereo-Aufnahmeverfahren ist es nicht unbedingt erforderlich, einen gerichteten optischen Strahl geringer Divergenz zu erzeugen und auf das Objekt zu führen. Vielmehr kann es ausreichen, das Objekt durch allgemeine Helligkeit ausreichend zu beleuchten. Wenn insofern von einem zum Objekt gerichteten Strahl gesprochen wird, dann repräsentiert dieser lediglich einen der beliebig vielen, das Objekt beleuchtenden Strahlen, nämlich denjenigen, der zu dem entsprechend betrachteten, vom Objekt reflektierten Strahl führt. Die Gesamtheit der zum Objekt gerichteten Strahlen (wodurch die Objektoberfläche erhellt wird), führt dann zu einer Vielzahl von vom Objekt reflektierten Strahlen, die in ihrer Gesamtheit ein Teilbild ergeben. Zur besseren Beschreibung und für das Verständnis der Erfindung wird angenommen, daß das eine Teilbild von einem bestimmten mittleren Strahl erzeugt wird, der unter einem ersten Winkel zum Objekt steht; und das zweite Teilbild von einem bestimmten zweiten Strahl erzeugt wird, der unter einem bestimmten zweiten Winkel zum Objekt steht, wobei die beiden bestimmten Strahlen unter einem Winkel zueinander gerichtet sind. Mit anderen Worten erzeugt die Umlenkeinrichtung in der Aufnahmeoptik beispielsweise eine Draufsicht des Objektes, während andererseits eine Schrägansicht des Objektes erzeugt wird. Dabei ist die Draufsicht lediglich ein Sonderfall. Wichtig ist nur, daß man zwei unterschiedliche Schrägaufsichten hat. In der Aufnahmeeinheit werden beide Aufsichten, d.h. beide Teilbilder, aufgenommen. Beispielsweise werden die Punkte dieser Teilbilder mittels eines Kameraobjektives auf einen CCD-Flächen-Chip abgebildet, so daß elektronische Daten für jedes Teilbild getrennt vorliegen. Diese können dann gespeichert und so ausgewertet werden, daß die räumlichen Daten abrufbar sind. Aus den aufgenommenen und gespeicherten Teilbildern lassen sich für die zwei unterschiedlichen Ansichten zwei unterschiedliche Komplettbilder zusammensetzen. Diese entsprechen beispielsweise der Draufsicht und der Schrägaufsicht. Es ist bekannt, wie man die Höhenkoordinaten der jeweiligen Punkte aus den unterschiedlichen Koordinaten der erfaßten markanten Punkte in der Draufsicht und in der Schrägaufsicht errechnet.

Die Aufnahmeeinheit kann anstelle der Verwendung eines einzigen CCD-Flächen-Chips auch zwei Zeilen-Chips aufweisen sofern der Träger in entsprechend kleinen Schritten verfahren wird. Hierbei kann das Objekt bzw. dessen Teilansicht entweder mittels eines einzigen Objektivs auf zwei nebeneinanderangeordnete Zeilen-Chips projiziert werden oder mittels zweier getrennter Objektive, erforderlichenfalls unter Einsatz eines Strahlteilers, auf die beiden dann räumlich getrennt anzuordnenden Zeilen-Chips.

Bei Verwendung zweier getrennter Aufnahmeeinheiten bietet es sich an, diese beiden Einheiten unter einem Winkel zueinander so anzuordnen, daß ein einziger Planspiegel in der Umlenkeinrichtung ausreicht.

Zur Aufnahme von Bildinformationen können CCD-Kameras (Zeilen- wie Flächenkameras) ebenso wie Röhrenkameras oder auch Kameras eingesetzt werden, die mit Filmmaterial arbeiten, wobei im letztgenannten Fall die notwendige Auswertung der aufgenommenen Teilbilder aufwendiger sein kann. Anstelle einer CCD-Zeilenkamera kann man auch ein lichtempfindliches Element zur Aufnahme eines einzelnen Punktes verwenden, z.B. eine Fotodiode, wenn eine mechanische Zeilenabtastung, z.B. durch einen drehenden oder oszillierenden Spiegel, realisiert wird.

Durch die beschriebenen Meß- und Auswerteinrichtungen bei der erfindungsgemäßen Vorrichtung zur Durchführung des Stereo-Bildverfahrens können besonders markante Punkte auf Objektoberflächen vermessen werden, im Falle der Zahntechnik z.B. Punkte an Halteelementen für die Kieferorthopädie.

Dabei ist es besonders vorteilhaft, wenn zwischen der Strahlquelle und dem Objekt ein Raster angeordnet ist. Beispielsweise kann dies ein Gitternetz oder jede andere Rasterfläche sein, wie z.B. eine Glasplatte mit eingeätztem Muster. Auf die Objektoberfläche ist somit vorteilhaft ein Raster projizierbar, so daß die Anzahl der zu vermessenden Punkte entsprechend der Feinheit des Rasters erhöht werden kann.

Punktmuster, Rasterflächen usw. erzeugen bei Verwendung statischer gerichteter Beleuchtung markante Punkte. Die Projektion von Querlinien (d.h. senkrecht zur Verfahrrichtung) erlaubt bereits das Erstellen eines Höhenprofils entlang jeder Linie, sofern der Winkel des Aufnahmestrahls ein anderer ist als der Projektionswinkel. Dieses Höhenprofil ist zur Vermessung der Kauflächen in der Zahntechnik sehr nützlich.

Die 3D-Informationen erhält man auch durch Projizieren von Punkten bzw. Linien oder auch Mustern auf die Objektoberfläche unter einem anderen Winkel, nämlich wenn man bewegte gerichtete Beleuchtung verwendet. Die Projektion der Punkte bzw. Linien ist eine getrennte Aufgabe und muß keineswegs durch eine am Träger angebrachte Umlenkoptik erfolgen. Ebenso ist ein zweiter Träger denkbar, welcher die Umlenkoptik für die Projektion trägt.

Wenn beispielsweise ein menschliches Gebiß zu kieferorthopädischen Zwecken vermessen werden soll, reicht es aus, zum einen einige markante Punkte (in diesem Fall die Brackets) zu vermessen - wozu das Stereo-Bildverfahren geeignet ist - und zum anderen ein relativ grobes Linienraster der Oberfläche (in diesem Fall der Kauflächen der Zähne) zu erhalten, wozu sich das Lichtschnittverfahren anbietet. Wünscht man eine Kombination aus Lichtschnittverfahren und Stereo-Bildverfahren, dann ist es besonders vorteilhaft, wenn die Vorrichtung erfindungsgemäß dadurch gekennzeichnet ist, daß neben der Strahlquelle zur Erzeugung eines in einer Ebene aufgeweiteten optischen Strahles eine eine Flächenkamera aufweisende Aufnahmeeinheit und im Abstand von dieser eine am Träger befestigte Umlenkeinrichtung angeordnet sind, welche für wenigstens zwei, unter einem Winkel zueinander und zum Objekt gerichtete, vom Objekt reflektierte Strahlen vorgesehen ist. Mit dieser Ausführungsform werden also einerseits die zwei Teilbilder über die gesamte Länge des Objektes hin hergestellt, und außerdem wird eine Datenmenge durch das Überfahren, Vermessen und Auswerten der dünnen Linie erhalten, welche nach der Methode des Lichtschnittverfahrens auf das Objekt projiziert wird.

Eine andere Ausführungsform der Erfindung ist gekennzeichnet durch eine an einem weiteren Träger befestigte Umlenkeinrichtung zum Richten des optischen Strahles zum Objekt hin, wobei dieser weitere Träger auf einer weiteren Bahn getrennt verfahrbar ist. Es gibt also einen ersten Träger für die Strahlquelle und einen weiteren Träger für die Umlenkeinrichtung, und jeder Träger ist auf einer bestimmten Bahn getrennt verfahrbar. Man kann sowohl für die beleuchtende Seite als auch für die Aufnahmeseite jeweils einen separaten Träger vorsehen.

Eine andere bevorzugte Ausführungsform der erfindungsgemäßen Vorrichtung weist eine Umlenkeinrichtung auf zum Richten des optischen Strahles zum Objekt, wobei diese Umlenkeinrichtung an dem Träger für die Aufnahmeumlenkeinheit befestigt ist und gemeinsam mit dieser verfahrbar ist. Für jede Einheit ist also bei dieser Ausführungsform ein gesonderter Träger mit Antrieb usw. vorgesehen. Alternativ kann man den optischen Strahl auch statt durch seine eigene Umlenkeinrichtung direkt mittels der Aufnahmeumlenkeinheit zum Objekt richten.

Weiterhin ist es erfindungsgemäß zweckmäßig, wenn ein Drehspiegel am Träger derart befestigt ist, daß die Drehachse des Drehspiegels orthogonal zur Bewegungsrichtung des Trägers liegt. Dabei sollte beachtet werden, daß der Drehspiegel durch die Drehbewegung charakterisiert ist. Unter dieser Bewegung versteht man ein kontinuierliches oder intermittierendes Drehen fortlaufend in einer Richtung oder auch ein oszillierendes Drehen in entgegengesetzten Richtungen. Der Spiegel sorgt selbstverständlich für die Umlenkung des optischen Strahles. Dabei kann der Drehspiegel an dem für die beleuchtende Seite einerseits und die reflektierende Seite andererseits gemeinsamen Träger befestigt sein. Der Drehspiegel dient vorzugsweise sowohl der Umlenkung des gerichteten Projektionsstrahles als auch der Umlenkung des zur Aufnahme dienenden Strahles.

Die Erfindung ist auch vorteilhaft dadurch ausgestaltet, daß die Strahlquelle Einrichtungen aufweist zur Erzeugung eines in einer Ebene aufgeweiteten optischen Strahls und die Umlenkeinrichtung für das Richten des linienförmig am Objekt reflektierten Strahles in die eine Flächenkamera aufweisende Aufnahmeeinheit ausgebildet ist.

Es wurde schon die Ausführungsform beschrieben, bei welcher die Umlenkeinrichtung wenigstens einen am Träger befestigten Planspiegel aufweist. Alternativ kann es aber besonders zweckmäßig sein, wenn erfindungsgemäß die Umlenkeinrichtung zwei unter unterschiedlichem Winkel am Träger befestigte Planspiegel aufweist. Eine solche Umlenkeinrichtung kann räumlich kompakt aufgebaut sein und vom Träger definiert und einfach bewegt werden.

Alternativ kann es bei anderen Ausführungsformen aber auch zweckmäßig sein, wenn erfindungsgemäß die Strahlrichtung der optischen Quelle unter einem Winkel zur optischen Achse der Aufnahmeeinheit festgelegt ist, wobei vorzugsweise die Umlenkeinrichtung einen am Träger befestigten Planspiegel aufweist. Wenn es die räumlichen Verhältnisse zulassen, diese Anordnung zu wählen, ergibt sich der erforderliche Winkel zwischen dem Strahl aus der optischen Quelle und der Aufnahmeachse der Kamera direkt und von selbst, und sowohl die Projektion des Strahls auf das Objekt als auch die Aufnahme der projizierten Linie kann über denselben einzigen Planspiegel erfolgen.

Günstig ist es auch, wenn erfindungsgemäß die Auswerteeinheit Einrichtungen zur Bildung einer 3D-Information aus der gerichteten optischen Bestrahlung des Objekts aufweist.

Bei dem speziellen Einsatz der erfindungsgemäßen Meßvorrichtung zum Vermessen eines Gebisses kann durch eine Verdoppelung der Wirkelemente der Umlenkeinrichtung die Möglichkeit geschaffen werden, gleichzeitig Ober- und Unterkiefer zu vermessen. Gegebenenfalls müssen dann auch die Strahlquellen und Aufnahmeeinheiten verdoppelt werden.

Besonders günstig ist erfindungsgemäß die Verwendung der Vorrichtung der vorstehend beschriebenen Ausführungsformen zum berührungslosen Vermessen von wenigstens einem Zahn eines Gebisses und/oder von Lage und/oder Form wenigstens eines auf dem Zahn angebrachten Halteelementes für orthodontische Drähte, sogenannten Brackets. Die oben beschriebene Meßvorrichtung gemäß der Erfindung erzeugt bei Anwendung des Stereo-Bildverfahrens zwei Abbildungen des Objektes aus verschiedenen Ansichten. Das Vermessen markanter Punkte in beiden Ansichten ermöglicht die Bestimmung der Raumkoordinaten dieser Punkte.

Um dem Bediener, z.B. einer Helferin in einem zahntechnischen Labor, diesen Meßvorgang zu erleichtern oder sogar eine automatische Erkennung relevanter Punkte durchführen zu können, kann man auf den Halteelementen, den sogenannten Brackets, mit denen Drahtbögen gehalten werden, für die kieferorthopädische Behandlung Markierungen anbringen und/oder deren Formgebung so wählen, daß eine automatische Erkennung möglich ist. Solche Markierungen können beispielsweise aufgedruckt, eingeätzt, vertieft oder auch erhaben sein. Zur leichteren Identifikation der Halteelemente (Brackets) ist es auch möglich, mit farbigen Markierungen zu arbeiten. Bei vorteilhafter Weiterbildung der Erfindung ist ferner vorgesehen, daß ein mit geeigneten Maßen und Oberflächen versehener Meßhilfskörper zum Einsetzen in die Mittelnut des Halteelementes vorgesehen ist. Mit Hilfe der Halteelemente, die im allgemeinen eine in Richtung der Zahnreihe verlaufende Mittelnut aufweisen, wird der erwähnte Drahtbogen gehalten. Das manuelle Verbiegen des Drahtbogens ist nur eingeschränkt möglich und in hohem Maße vom Geschick des Behandlers abhängig. Durch die richtige Formgebung des Drahtbogens werden erwünschte Kräfte und Momente auf die Halteelemente und damit auf die Zähne bewirkt. Will man die beschränkten Möglichkeiten des manuellen Biegens des Drahtbogens kompensieren, dann kann man entweder verschiedene Drahtquerschnitte verwenden, so daß sich die Größenordnung der Kräfte durch die Eigensteifigkeit des Drahtes ergibt. Der Querschnitt der Mittelnut (Aufnahmerachen) im Halteelement entspricht deshalb dem Querschnitt des größten einzusetzenden Drahtes. Zwei gebräuchliche Maße liegen bei einer Nuthöhe von 0,47 mm bzw. 0,56 mm und einer Nuttiefe von 0,76 mm. Die beschriebene Vorrichtung gemäß der Erfindung zur optischen Vermessung von kieferorthopädischen Drahthalteelementen ermöglicht den Einsatz einer computergesteuerten Biege- bzw. Tordiermaschine für das Anpassen des Drahtbogens an die aktuelle Gebißform des Patienten. Beim Einsatz einer solchen Vorrichtung in Verbindung mit der beschriebenen optischen Vermessung der Halteelemente sind sowohl deren Lage als auch die entspannte Form des einzusetzenden Drahtbogens bekannt. Dadurch können mittels der aus der Statik bekannten Berechnungsverfahren die aufgrund der elastischen Verformung des eingesetzten Drahtbogens auf die Halteelemente wirkenden Kräfte und Momente genau vorherbestimmt bzw. ausgewählt werden. Bei Kenntnis der Erfindung braucht man also nicht mehr verschiedene Querschnitt für Drahtbögen vorzusehen, so daß auf die Lagerhalterung und Handhabung von Drahtbögen verschiedener Querschnitte verzichtet werden kann. Der unter anderem gebräuchliche quadratische Querschnitt von 0,41 mm x 0,41 mm ist ausreichend, um bei einem Drahtbogen, der mit der erfindungsgemäßen Vorrichtung exakt angepaßt sein kann, die erforderlichen Kräfte und Momente aufzubringen.

Es ist deshalb sinnvoll, Halteelemente einzusetzen, deren Mittelnut an einen solchen Draht mit relativ kleinem Querschnitt angepaßt ist. Dies wäre im oben genannten Beispiel ein Nutenmaß von 0,43 mm x 0,43 mm. Durch diese kleinere Nut können die Abmessungen des Halteelementes vermindert werden, insbesondere wird das Bracket flacher, was den Tragekomfort für den Patienten erhöht.

Die bisher in der Kieferorthopädie eingesetzten Drahthaltelemente sind im allgemeinen nicht ausreichend zur einfachen bzw. automatisierbaren optischen Vermessung geeignet. In diesem Falle ist es sinnvoll, in die Halteelemente (Brackets) für die Vermessung anstelle des Drahtbogens die erwähnten Meßhilfskörper einzusetzen, deren Form und Ausführung eine gute Identifizierung ermöglichen.

Der Antrieb des Trägers der erfindungsgemäßen Meßvorrichtung erfolgt vorzugsweise über einen Schritt- oder Servomotor, kann aber auch wie bei Filmprojektoren über ein Malteserkreuz oder über einen einfachen Sperrklinkenmechanismus erfolgen. Möglich ist auch die Verwendung eines Antriebes in Verbindung mit einem Wegmeßsystem, so daß der aktuelle Ort des Trägers erfaßbar ist.

Erfolgt ein schrittweiser Antrieb des Trägers, dann gilt die Überlegung, daß je kleiner die Verfahrensschritte von einer Aufnahmeposition zur nächsten gewählt werden, umso kleiner dann der zu erfassende Bereich des Objektes ist, und umso kleiner wird die dazu notwendige Höhe der Umlenkspiegel, wodurch die erforderliche Bauhöhe der Meßvorrichtung reduziert werden kann. Dieser Verringerung sind dadurch Grenzen gesetzt, daß durch eine extreme Verkleinerung der Umlenkspiegel der Effekt einer Schlitzblende entsteht mit der Folge, daß die erforderliche Beleuchtungsstärke zunimmt. Die Länge der Verfahrensschritte wird vorzugsweise an die mögliche Auflösung einer lichtempfindlichen Fläche in der Aufnahmeeinheit angepaßt. Bei der Verwendung einer CCD-Kamera ist es sinnvoll, die Verfahrensschrite so auszulegen, daß ein Verfahrensschritt auf der Bildebene dem Zeilenabstand des Chips entspricht, so daß jeweils nur eine Chipzeile je Spiegelansicht ausgewertet wird. Es sind in der Praxis Bewegungsschritte für den Träger im Bereich zwischen 1/100 bis 1 mm als zweckmäßig verwendet worden. Besonders bevorzugt in der Kieferorthopädie ist eine Schrittlänge von 1/10 mm.

Weitere Merkmale, Vorteile und Anwendungsmöglichkeiten der vorliegenden Erfindung ergeben sich aus der folgenden Beschreibung bevorzugter Ausführungsformen in Verbindung mit den anliegenden Zeichnungen. Es zeigen:
- Figur 1: schematisch eine erste Ausführungsform der Meßvorrichtung mit Träger und an diesem befestigter Umlenkeinrichtung einerseits sowie Aufnahmeeinheit andererseits,
- Figur 2: die gleiche Vorrichtung wie Figur 1, wobei jedoch Mittel zur Abbildung eines Rasters zusätzlich dargestellt sind,
- Figur 2a: eine ähnliche Ansicht wie Figur 1, wobei jedoch andere Mittel zur Abbildung eines Rasters auf der Objektoberfläche als bei Figur 2 vorgesehen sind,
- Figur 3: eine ähnliche schematische Ansicht der Meßvorrichtung wie bei Figur 1, wobei jedoch ein Drehspiegel und Strahlquelle mit Aufnahmeeinheit zur Durchführung des Lichtpunktprojektionsverfahrens angeordnet sind,
- Figur 4: eine schematische weitere andere Ausführungsform der Meßvorrichtung zur Durchführung des Lichtschnittverfahrens,
- Figur 4a: die gleiche Vorrichtung wie bei der Figur 4, wobei jedoch von den wesentlichen Teilen (unter Weglassung des Trägers) perspektivische Darstellungen gegeben sind,
- Figur 5: eine weitere andere Ausführungsform der Meßvorrichtung mit vereinfachter Umlenkeinrichtung und unter einem Winkel zueinander angeordnete Strahlrichtungen aus der Strahlquelle einerseits und zur Aufnahmeeinheit andererseits,
- Figur 6: eine ähnliche schematische Ansicht wie in den vorhergehenden Figuren, jedoch einer anderen Ausführungsform mit dem kombinierten Stereo-Bild- und Lichtschnittverfahren,
- Figur 7: eine weitere andere Ausführungsform der Meßvorrichtung unter Verdoppelung der Meßbereiche,
- Figur 8: perspektivisch drei Zähne einer Zahnreihe mit auf deren äußerer Oberfläche aufgeklebten Halteelementen (Brackets),
- Figur 8a: die perspektivische Darstellung eines Halteelementes an einem Zahn mit Maßen in perspektivischer Darstellung,
- Figur 8b: eine Ansicht des Halteelementes in Richtung der Zahnreihe mit Maßangaben,
- Figur 9: perspektivisch die Darstellung eines Halteelementes mit einem eingesetzten Meßhilfskörper,
- Figur 9a: perspektivisch die Darstellung eines Halteelementes mit einer anderen Form von eingesetztem Meßhilfskörper und
- Figur 10 und 10a: weitere Ausführungsformen, bei welchen der Träger Drehbewegungen ausführt.

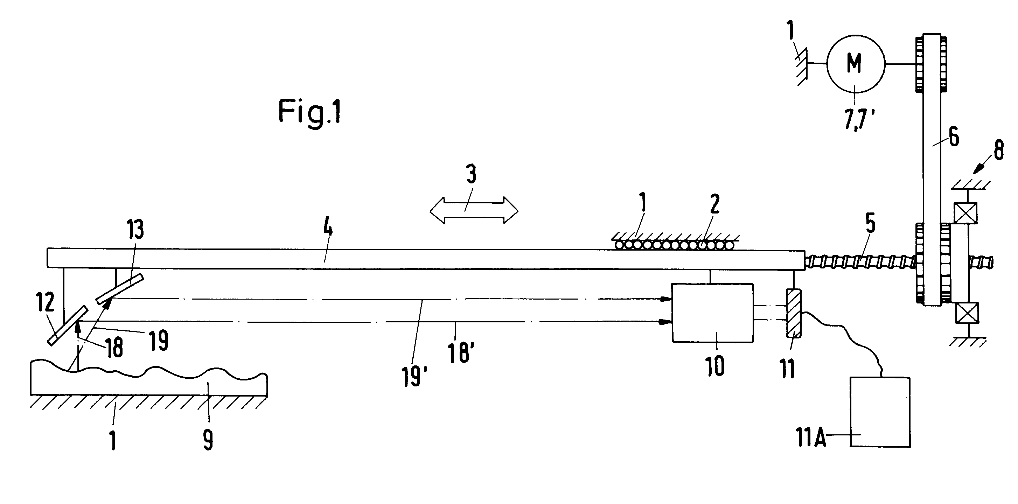

Die Meßvorrichtung der Figur 1 ist zur Vereinfachung der Beschreibung und für die bessere Verständlichkeit ohne bekannte, selbstverständliche Vorrichtungsteile nur schematisch wiedergegeben. An einem Grundgestell 1 ist über eine Kugelführung 2 ein geradlinig in Richtung des Doppelpfeiles 3 verfahrbarer Träger 4 gelagert und wird mit einer Spindel 5 bewegt gelagert. Diese wird von einem ebenfalls am Grundgestell 1 befestigten Motor 7 (Schritt- oder Servomotor) mittels eines Zahnriemens 6 und einer allgemein mit 8 bezeichneten Spindelmutter mit Riemenscheibe angetrieben. 7' veranschaulicht ein gegebenenfalls für den Motor 7 vorgesehenes integriertes Meßsystem.

Das Objekt 9 ist hier als eine mit dem Grundgestell 1 verbundene Oberfläche mit dreidimensionalen Erstreckungen dargestellt, z.B. könnte es sich um die Reihe Zähne eines menschlichen Gebisses handeln. In engem Abstand vom Objekt 9 erstreckt sich der Träger 4 in Richtung der Mundöffnung, und man kann sich leicht vorstellen, daß der Träger mit seinen Aufbauten im Bereich des Objektes 9 innerhalb der Mundhöhle untergebracht werden kann. In diesem Bereich befinden sich zwei unter unterschiedlichem Winkel zueinander und zum Objekt 9 angestellte Planspiegel 12 und 13, während am anderen Ende des länglich ausgebildeten Trägers 4, also außerhalb der Mundhöhle, die Aufnahmeeinrichtung am Träger befestigt ist, im vorliegenden Falle ein Kamera-Objektiv 10 mit einem CCD-Flächen-Chip 11.

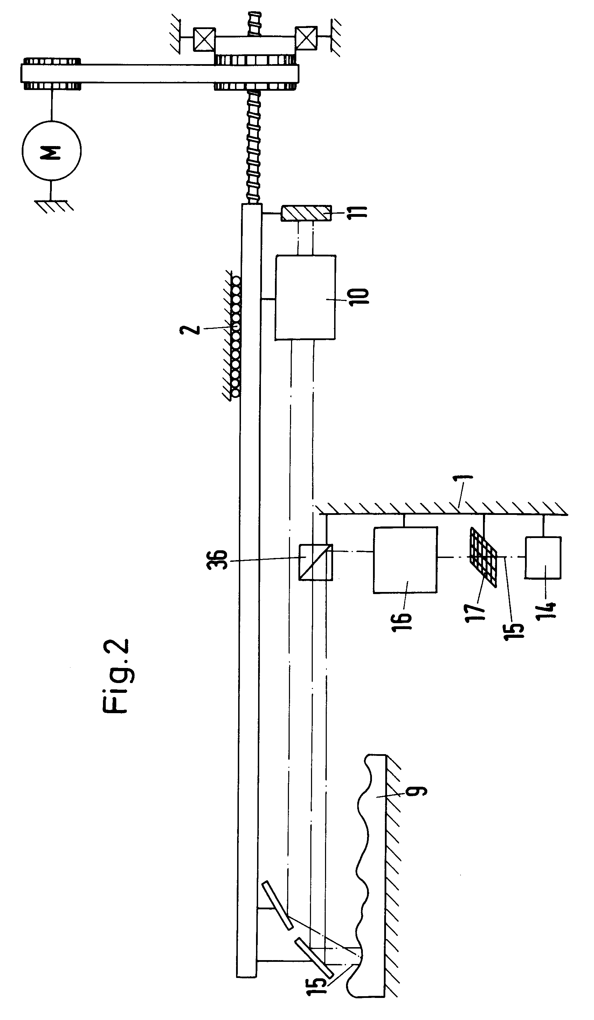

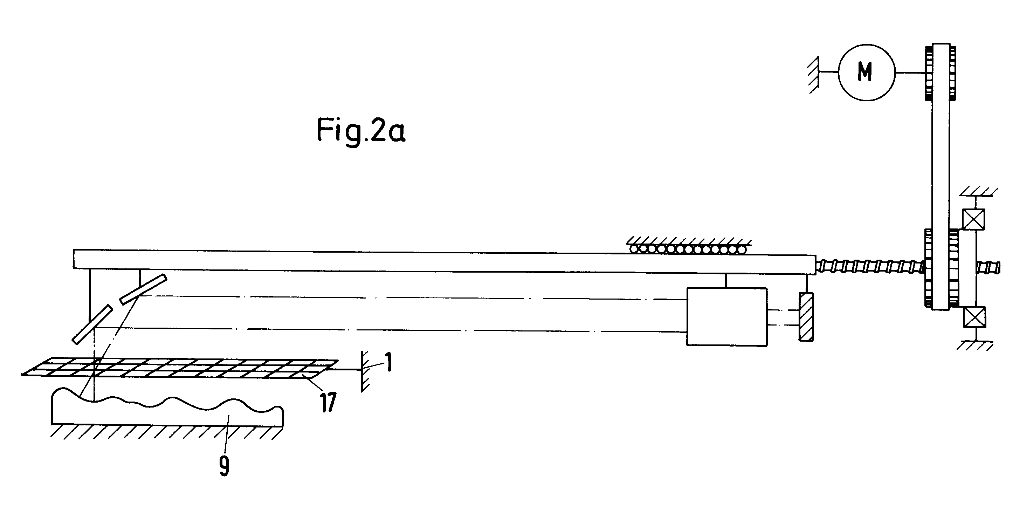

Bezüglich dieser Teile sind die Ausführungsformen der Meßvorrichtung nach den Figuren 2 und 2a gleich aufgebaut, weshalb die gleichen Teile dort nicht numeriert sind.

In Figur 2 ist als Besonderheit eine ebenfalls am Grundgestell 1 befestigte Strahlquelle 14 vorgesehen, die bei der Ausführungsform der Figur 1 und analogen Ausführungsformen eine Strahlquelle zur Erzeugung "allgemeiner Helligkeit" ist, weil es z.B. bei der Ausführungsform der Figur 1 genügt, daß die Oberfläche des Objektes 9 hell ist und reflektierte Strahlen abgeben kann. Hingegen ist bei anderen dargestellten Ausführungsformen, wie z.B. in Figur 2, die Strahlquelle 14 gesondert dargestellt als eine solche zur Erzeugung von gerichteten Strahlen. In Figur 2 ist dieser Strahl als strichpunktierte Linie dargestellt und mit 15 bezeichnet. Es handelt sich bei den hier beschriebenen konkreten Ausführungsformen um Lichtstrahlen aus dem sichtbaren Bereich. (Man kann sich alternativ auch Strahlen im Infrarot- oder Umtraviolettbereich mit entsprechenden Sende- und Empfangseinrichtungen vorstellen). Die Strahlquelle 14 enthält ein nicht näher dargestelltes Linsensystem, und zwischen diesem und einem weiteren Linsensystem 16 ist ein Raster 17 oder ein Gitternetz so angeordnet, daß dessen Projektion auf die Oberfläche des Objektes 9 zur Erzeugung markanter Punkte auf der Oberfläche gelingt. Dieses Raster 17 kann auch eine Glasplatte mit eingeätzten Mustern sein.

In Figur 2a ist eine andere ähnliche Alternative der Ausführungsform gezeigt, bei welcher das Raster 17 am Grundgestell 1 direkt über der Oberfläche des Objekts 9 befestigt wird, so daß beispielsweise durch eine entsprechende Optik ein Schattenmuster auf die Objektoberfläche geworfen wird.

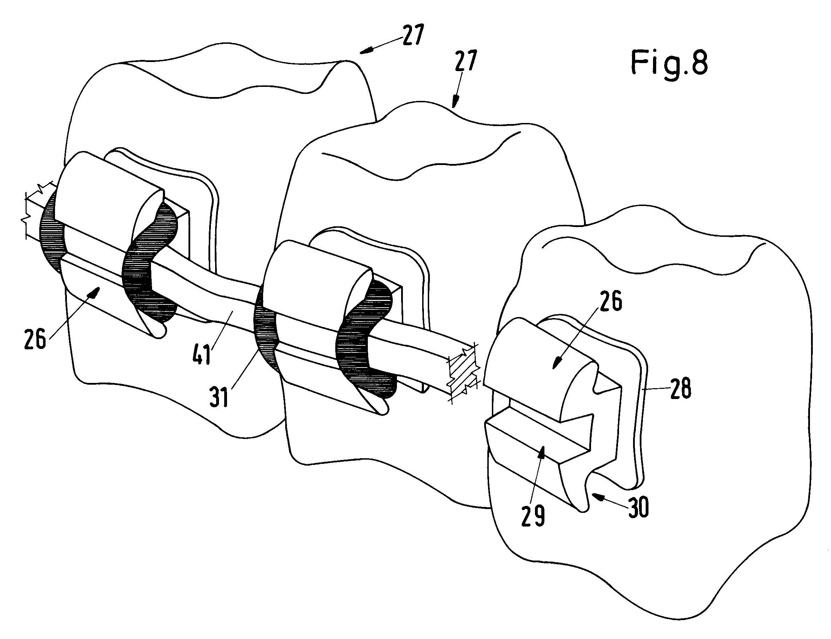

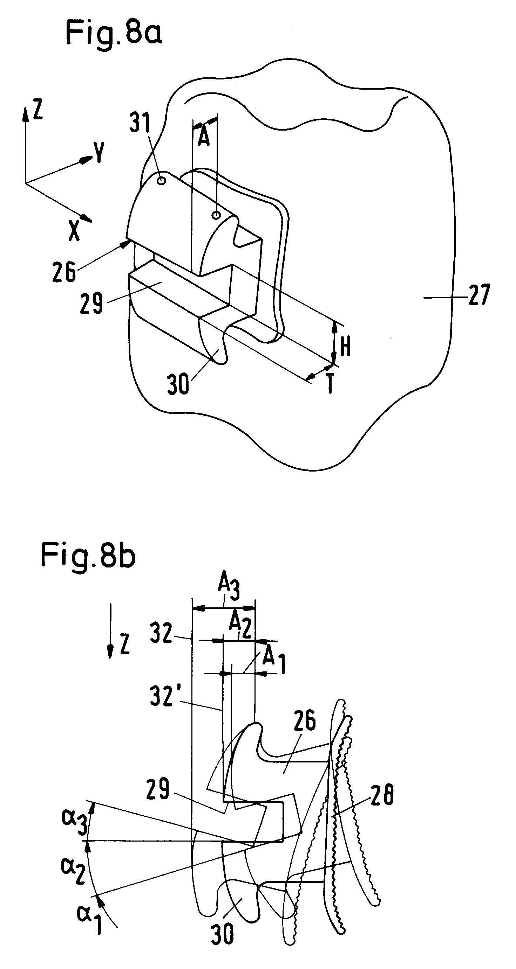

Ähnlich Figur 8a ist Pfeil 3 in einer X-Achse liegend zu denken. Eine gedachte Y-Achse verläuft senkrecht zu dieser X-Achse und senkrecht zur Zeichnungsebene.

Durch die entsprechende Beleuchtung der Oberfläche des Objektes 9 werden reflektierte Strahlen erzeugt und zur Aufnahmeeinheit 10, 11 geführt. Beispielsweise verläuft der reflektierte Strahl 18 (Draufsicht) senkrecht zu einer in X-Y-Ebene liegenden Hauptfläche auf den äußeren Planspiegel 12, wo er abgelenkt und in Form des reflektierten Strahles 18' in das Objektiv 10 und mit geeigneter Abbildung auf den Flächenchip 11 geführt wird. Hierdurch entsteht ein erstes Teilbild. Repräsentativ für die anderen reflektierten Strahlen zur Erzeugung des anderen Teilbildes ist ein anderer reflektierter Strahl 19 zum Planspiegel 13 gerichtet und wird dort nach Umlenkung als Strahl 19' ebenso zum Kameraobjektiv 10 geführt. Der Strahl 18' bildet also in der Aufnahmeeinheit 10, 11 eine Draufsicht, und mit dem anderen Spiegel 13 wird durch den reflektierten Strahl 19' eine Schrägaufsicht gebildet. Die elektronische Verarbeitung des hier nicht weiter beschriebenen Ausgangssignals des Chips 11 ermöglicht die getrennte Speicherung und Auswertung der beiden Teilbilder. Außerdem ist durch den beschriebenen Antrieb des Trägers 4 dessen jeweiliger exakter Ort und damit der der Umlenkeinrichtung 12, 13 relativ zum Objekt 9 bekannt. Die aufgenommenen und gespeicherten Teilbilder werden zu zwei Komplettbildern zusammengesetzt, welche den Bildern der Draufsicht und der Schrägaufsicht entsprechen. Wie oben schon gesagt, lassen sich aus den unterschiedlichen Koordinaten markanter Punkte in den beiden Ansichten die Höhenkoordinaten errechnen. Der Träger 4 wird vorzugsweise in kleinen Schritten von 1/10 mm in Richtung des Doppelpfeiles 3 verschoben, beispielsweise von hinten nach vorn, d.h. in den Figuren von links nach rechts zur Messung von einer Anfangsposition (links) in die Endposition (rechts), in welcher die reflektierten Strahlen 18 und 19 von der in den Figuren dargestellten rechten äußersten Kante des Objektes 9 stammen. Die Auswerteeinheit ist mit 11 a bezeichnet und am Chip 11 angeschlossen. Sie ist zwar nur in Figur 1 dargestellt, ist aber auch bei den anderen Ausführungsformen vorhanden zu denken.

Mit den vorstehenden Figuren 1 bis 2a ist das Stereo-Bildverfahren beschrieben worden.

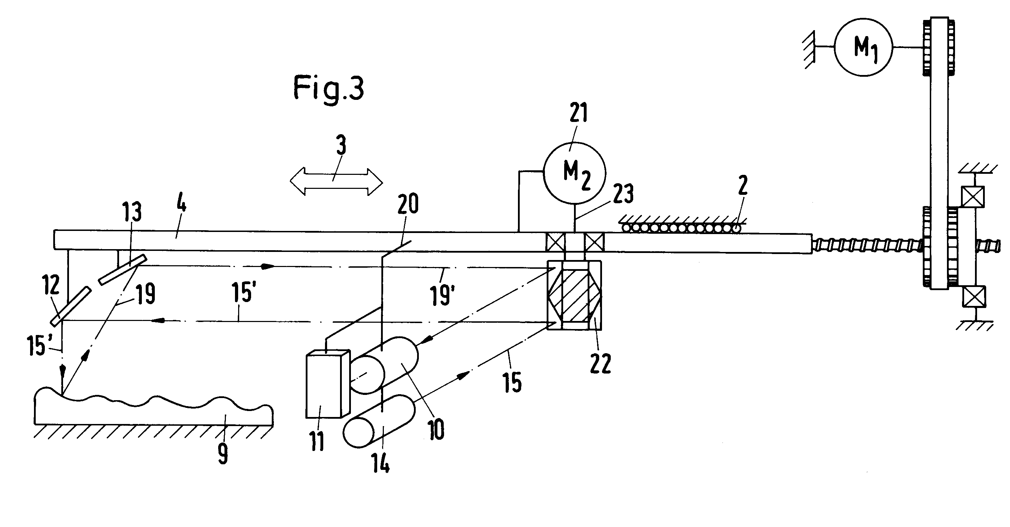

Das Lichtpunktprojektionsverfahren wird nun anhand Figur 3 beschrieben.

Auf dem hinteren äußeren Ende des Trägers 4 befinden sich wieder die beiden Spiegel 12 und 13, und mitfahrbar mit dem Träger 4 sind weiter rechts an der mit 20 angedeuteten Befestigungsstange (nur schematisch) die Lichtquelle 14 und darüber das Kameraobjektiv 10 mit dem dahinter angeordneten CCD-Zeilen-Chip 11 angebracht.

Außerdem ist über einen zweiten Schritt- oder Servomotor 21 ein Drehspiegel 22 mitfahrbar am Träger 4 so befestigt, daß die Achse 23 des Drehspiegels 22 senkrecht zur translatorischgeradlinigen Bewegung gemäß Doppelpfeil 3 liegt. Der von der Strahlquelle 14 gerichtete Strahl mit geringer Divergenz und kleinem Durchmesser 15 wird am Drehspiegel 22 umgelenkt und trifft als Strahl 15' auf den äußeren Planspiegel 12, der diesen Strahl auf die Oberfläche des Objektes 9 wirft, von wo er ähnlich wie bei Figur 1 als reflektierter Strahl 19 zu dem anderen Planspiegel 13 geführt und dort umgelenkt und als Strahl 19' auf den Drehspiegel 22 geführt wird, wo er umgelenkt und in das Objektiv 10 geleitet wird.

Die Ablenkung der Strahlen erfolgt über den Drehspiegel 22 mit den angedeuteten mehreren Spiegelflächen. Durch dessen Bewegung ist der Strahl in wenigstens einer Ebene oszillierend so verschwenkbar, daß der Lichtstrahl 15' nach Ablenkung über den Planspiegel 12 die gesamte zu vermessende Breite des Objektes 9 bestreicht. Auch die Aufnahme des reflektierten Strahles 19' erfolgt über den Drehspiegel 22. Dadurch reicht der Einsatz eines nur vertikal stehenden CCD-Zeilen-Chips 11, auf den über das Kameraobjektiv 10 der Lichtpunkt projiziert wird. Die aktuelle Winkelstellung des Drehspiegels 22 und damit auch die Information, an welcher Stelle der Zeile die Abtastung gerade stattfindet, ist exakt bekannt.

Der in Figur 3 dargestellte Drehspiegel 22 erfüllt also zwei Funktionen: Zum einen wird der in der Strahlquelle (hier Lichtquelle) 14 erzeugte Strahl 15 seitlich abgelenkt (oszillierend verschwenkbar), zum anderen wird auch der vom Objekt 9 reflektierte Strahl 19, 19' über die gleiche Spiegelfläche des Drehspiegels 22 zurück in die Kameraoptik 10 gelenkt, so daß aus Sicht der Kamera die seitliche Ablenkung des auf das Objekt projizierten Strahls 15' nicht zu bemerken ist. Aus diesem Grunde muß für die rechnerische Verarbeitung diese seitliche Auslenkung (gemessen über den momentanen Drehwinkel des Spiegels 22) bekannt sein. Alternativ dazu kann jedoch die Aufnahme des projizierten Lichtpunktes über eine Kamera erfolgen, welche direkt auf den Planspiegel 13 gerichtet ist. Hier müßte allerdings eine Flächenkamera eingesetzt werden, da sowohl die seitliche Ablenkung des Strahls, welche durch den Drehspiegel 22 hervorgerufen ist, als auch die in Planspiegel 13 erscheinende Höhenauslenkung aufgenommen werden muß. Durch die direkt in der Kamera (Chipkamera 11) sichtbare seitliche Auslenkung des Strahls entfällt die Notwendigkeit, den momentanen Drehwinkel des Drehspiegels 22 zu messen.

Figur 5 zeigt für das Lichtschnittverfahren eine andere Ausführungsform der Meßvorrichtung. Man kann anhand dieser Figur 5 aber auch verschiedene Aufnahmemethoden beschreiben. Es ist z.B. nicht erforderlich, den für das Meßverfahren notwendigen Winkel zwischen dem Lichtstrahl 15 und der optischen Achse (die im Falle der Figur 5 mit dem reflektierten Strahl 19' zusammenfällt bzw. mindestens parallel zu diesem liegt) der Kamera 10 durch zwei in unterschiedlichem Winkel angeordnete Planspiegel, wie in den vorhergehenden Figuren die Spiegel 12 und 13, zu realisieren, sondern es ist auch möglich, die Strahlquelle 14 deutlich höher oder tiefer als die Kamera 10 anzuordnen, so daß der notwendige Winkel von vornherein bzw. durch diese Anordnung von selbst entsteht. In diesem Falle kommt man mit einem einzigen Umlenkspiegel 12' aus (anstelle der zwei separaten Umlenk-Planspiegel 12 und 13).

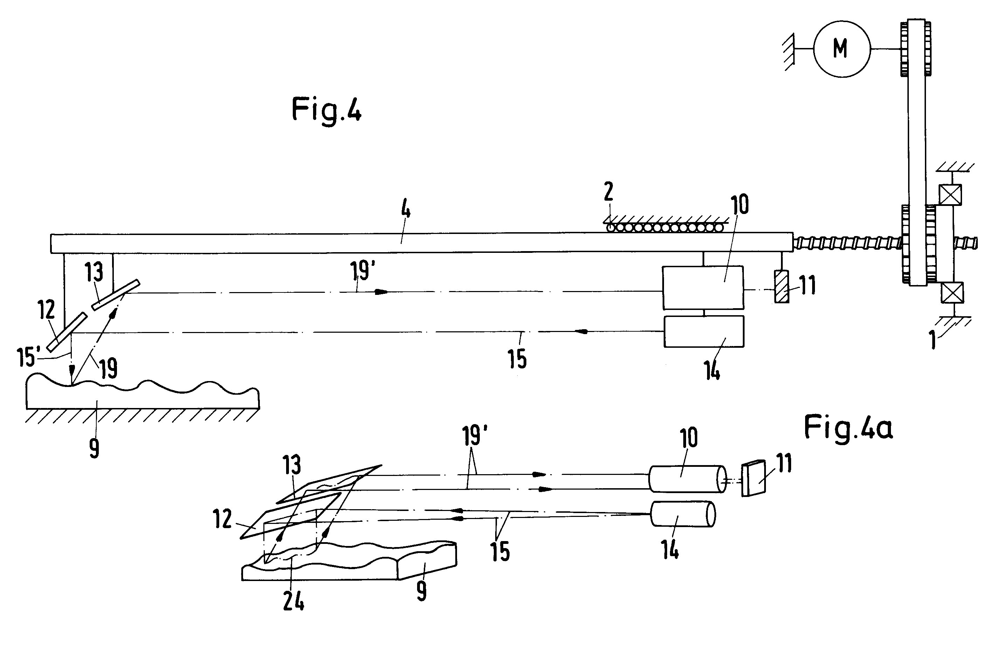

Das Lichtschnittverfahren wird anhand der Figuren 4 und 4a beschrieben. Durch die perspektivische Darstellung der Figur 4a erkennt man den aufgeweiteten Strahl 15, der aus der Strahlquelle 14 kommt und darüber den reflektierten, aufgeweiteten Strahl 19', welcher in die Kamera 10 geführt wird. Die Strahlquelle 14 erzeugt einen Lichtstrahl wie bei der oben beschriebenen Lichtpunktprojektion, dieser Strahl ist jedoch in der aus Figur 4a unten ersichtlichen Ebene aufgeweitet, so daß über den hinteren Planspiegel 12 eine dünne Linie 24 auf das Objekt 9 projiziert wird, die über den anderen Planspiegel 13 als reflektierte Strahlebene 19' von der Kamera 10, 11 aufgenommen wird. Hier ist der Einsatz einer Flächenkamera erforderlich, denn die auf das Objekt projizierte dünne Linie 24 erscheint nur in der Draufsicht des senkrecht von oben auftreffenden Strahles 15' als gerade Linie, in Richtung der reflektierten Strahlen ist es eine geschwungene Linie.

Die Anordnung der Lichtquelle 14 bezüglich des Kameraobjektivs 10 kann auch unter einem anderen Winkel erfolgen, wobei dann der aufgeweitete Strahl 15 über nicht dargestellte Umlenkspiegel und/oder Strahlteiler im geforderten Winkel auf den hinteren, äußeren Planspiegel 12 gerichtet wird.

Um nochmals auf die Darstellung der Figur 5 zurückzukommen, auch das Lichtschnittverfahren kann unter Verwendung nur eines einzigen Planspiegels 12' als Umlenkeinrichtung eingesetzt werden. Wenn die räumlichen Verhältnisse eine solche Anordnung zulassen, wie in Figur 5 dargestellt, dann ergibt sich der erforderliche Winkel zwischen der Strahlquelle 14 und der Aufnahmeachse (parallel zum Strahl 19') der Kamera 10, 11 direkt. Somit kann die Projektion des Lichtstrahls 15, 15' auf das Objekt 9 ebenso über denselben Planspiegel 12' erfolgen, wie auch die Aufnahme der projizierten Linie 19'.

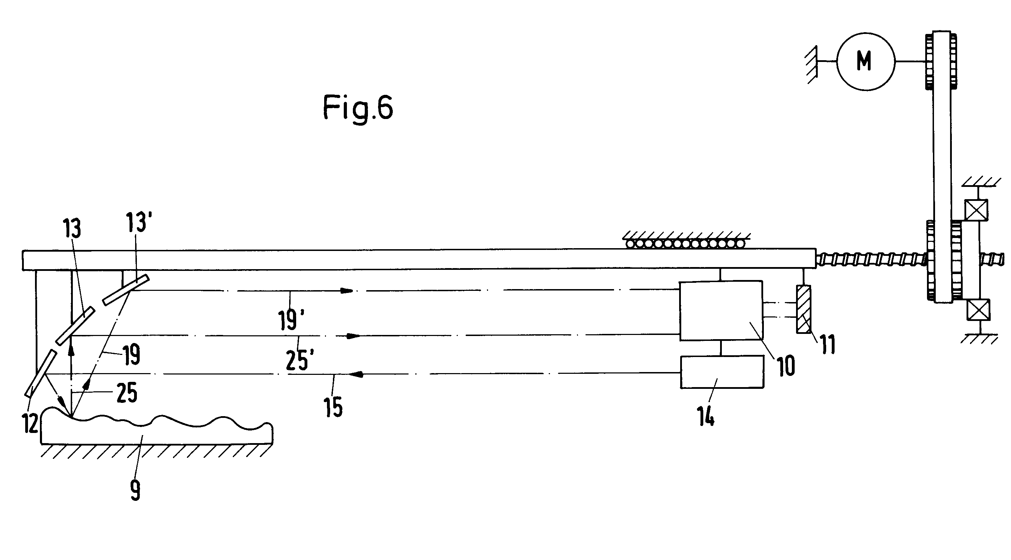

Anhand Figur 6 wird die Kombination aus Lichtschnittverfahren und Stereo-Bildverfahren beschrieben.

Dem Vorteil des Lichtschnittverfahrens, alle Punkte einer Oberflächen vermessen zu können (im Gegensatz zum Stereo-Verfahren, bei welchem nur markante Punkte vermessen werden können), steht die Bedingung der höheren Datenmenge beiseite, welche bei der Aufnahme anfällt, denn für jede abzutastende Zeile, also bei schrittweisem Antrieb für jeden Verfahrensschritt des Trägers 4, muß ein flächiges Bild aufgenommen werden. Beim Stereo-Bildverfahren reicht die Aufnahme einer einzigen Zeile aus.

Bei der Ausführungsform der Figur 6 handelt es sich im wesentlichen um die gleiche Vorrichtung wie die in Figur 1. In Figur 6 ist nur zusätzlich eine einen gerichteten Strahl erzeugende Strahlquelle 14 angeordnet, die ähnlich wie bei der Ausführungsform der Figur 4 einen aufgeweiteten Lichtstrahl 15 erzeugt. Über den äußeren Planspiegel 12 wird dieser aufgeweitete Lichtstrahl 15 wieder auf die Oberfläche des Objektes 9 projiziert. Außerdem ist dieses Lichtschnittverfahren mit dem Stereo-Bildverfahren kombiniert, so daß außerdem reflektierte Strahlen 19, 19' über den vordersten inneren Planspiegel 13' von der Aufnahmeeinheit 10, 11 aufgenommen werden oder alternativ von der Objektoberfläche reflektierte Strahlen 25 und nach Reflexion am mittleren Umlenkplanspiegel 13 die Strahlen 25' aufgenommen werden. Über die Planspiegel 13 und 13' wird also wieder ein Stereo-Bild aufgenommen, wozu zwei Planspiegel erforderlich sind.

Ähnlich wie bei der Ausführungsform der Figur 5 ist es unter entsprechend räumlichen Bedingungen aber auch möglich, die Strahlquelle 14 wieder unter dem in Figur 5 gezeigten Winkel zur optischen Achse der Kamera anzuordnen, so daß dann der Planspiegel 12 entfallen kann.

Auch bei dem reinen Stereo-Bildverfahren kann man bei der Anordnung der optischen Achse des einen Objektivs oder beider Objektive unter einem Winkel zur Richtung der Strahlquelle auch mit nur einem einzigen Planspiegel 13 oder 13' auskommen.

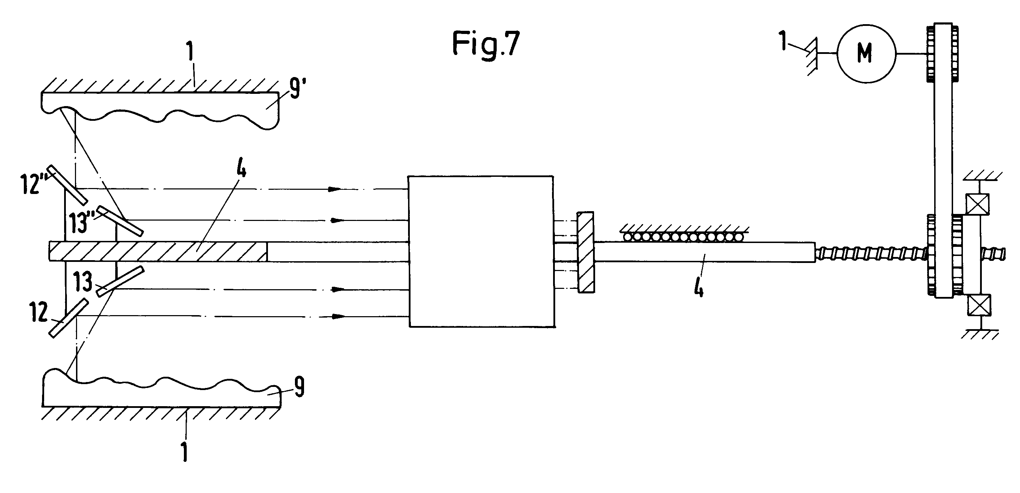

Figur 7 zeigt eine ähnliche Vorrichtung wie Figur 1, wobei jedoch lediglich die Meßverhältnisse verdoppelt sind. Diese Ausführungsform dient der gleichzeitigen Vermessung des Ober- und Unterkiefers eines Gebisses 9, 9'. Im allgemeinen wird dieses bei Anwendung in der Zähntechnik über eine Glasplatte starr mit dem Grundgestell 1 gekoppelt, z.B. durch Berühren oder Klemmen, denn die Zähne sind am Kiefer befestigt und nicht auf der nur schematisch hier dargestellten Grundplatte 1 unter dem Objekt 9 und über dem Objekt 9'.

Hier werden vier Planspiegel 12, 13, 12'', 13'' spiegelsymmetrisch zur Mittelebene verwendet, welche durch den gemeinsamen Träger 4 verläuft. Auf diese Weise kann man Ober- und Unterkiefer gleichzeitig vermessen.

Hinsichtlich der besonderen Verwendung der Meßvorrichtung nach einer der vorstehend beschriebenen Ausführungsformen wird anhand der Figuren 8 bis 9a die Gestaltungsmöglichkeit der Drahthalteelemente 26 und der Meßhilfskörper 33 bzw. 33' für die Kieferorthopädie beschrieben.

Durch die vorstehend beschriebene Meßvorrichtung kann man die optische Erkennbarkeit der schon erwähnten Halteelemente 26 (sogenannte Brackets) verbessern.

In Figur 8 sieht man die aus drei Zähnen 27 bestehende Reihe eines Gebisses, wobei über Klebeflächen 28 auf der äußeren Oberfläche des Zahnes 27 jeweils ein Halteelement 26 aufgebracht ist.

Das Halteelement hat die in Figur 8b im Querschnitt (in Z-Y-Ebene der Figur 8a) dargestellte Pilzform, wobei das Halteelement 26 außen in seiner Längsrichtung (X-Richtung) von einer Mittelnut 29 durchzogen ist. Diese dient der Aufnahme des Drahtbogens 41. Zu beiden Seiten schließen sich hakenförmige Stege 30 an die Mittelnut 29 an, um welche ein Gummiring 31 in der linken Darstellung der Figur 8 zur Befestigung des Drahtbogens 41 am Halteelement 26 befestigt bzw. umgelegt wird.

Die Geometrie wird anhand Figur 8a erläutert. Auf den äußeren Enden der hakenförmigen Stege 30 sind auf der Oberfläche des Halteelementes 26 zwei Markierungspunkte angebracht, beispielsweise durch Aufdrucken, Einsetzen, Anbohren oder Auflöten. Diese Markierungen 31 heben sich von der übrigen Oberfläche des Halteelementes 26 optisch ausreichend ab, so daß eine eindeutige und automatisierbare Erkennung und Vermessung dieses markanten Punktes 31 möglich ist.

Aus der Kenntnis der Raumkoordinaten dieser Punkte ergeben sich die X-, Y- und Z-Koordinaten des Halteelementes 26 sowie dessen Winkelstellung um die Y- und Z-Achse. Aus dem Abstand dieser Punkte 31 von der Kante des Halteelementes, die in der Projektion der Z-Richtung als Linie erscheint und durch die Begrenzungslinie 32 in Figur 8b (bzw. 32' für ein anderes Maß) dargestellt ist, ergibt sich die Winkellage um die X-Achse, in Figur 8b dargestellt durch die Winkel α1 bzw. α2 bzw. α3. Um eine genaue Messung dieser Winkelstellung zu ermöglichen, kann man die Kontur der Außenfläche des Halteelementes 26, also die vom Zahn 27 abgewandte Fläche, so wählen, daß sich innerhalb eines vorgegebenen, anatomisch sinnvollen Winkelbereiches für jeden gemessenen horizontalen Abstand A1 bzw. A2 bzw. A3 (Figur 8b) von der Außenfläche des Halteelementes, der Linie gemäß Projektion 32 bzw. 32' usw., zu den Markierungspunkten eine eindeutig zugeordnete Winkelstellung ergibt.

In Figur 8a erkennt man auch die gebräuchlichen Maße der Höhe H der Mittelnut 29 von 0,47 mm bzw. 0,56 mm (für das Maß H) und der Tiefe T der Mittelnut 29 von z.B. 0,76 mm.

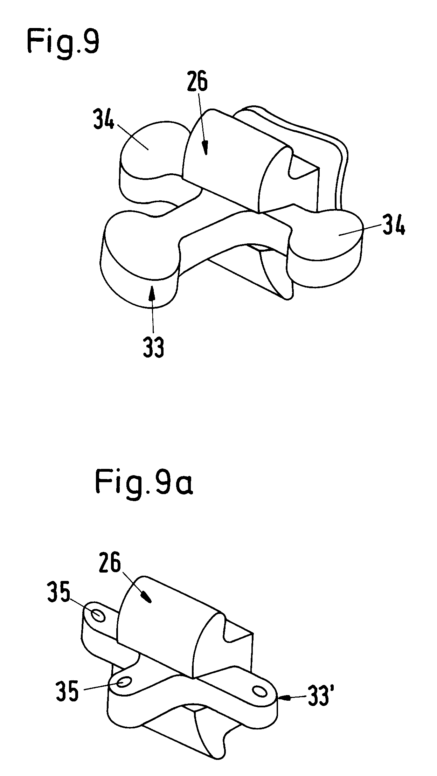

Zwei verschiedene Ausführungsformen von Meßhilfskörpern 33 bzw. 33' erkennt man aus den Figuren 9 bzw. 9a.

Nach Figur 9 hat der Meßhilfskörper 33 in Draufsicht T-Form mit abgerundeten Verdickungen 34 an den Schenkelenden. Die Dicke des Meßhilfskörpers entspricht der Höhe der Mittelnut 29 und wird durch zwei in entsprechendem Abstand voneinander liegenden parallelen Ebenen gebildet. Dadurch sind die Meßhilfskörper in der X-Y-Ebene plattenförmig und haben eine flache, ebene Oberfläche.

Bei dem Meßhilfskörper 33' der Figur 9a sind die Schenkelenden ohne die erwähnten Verdickungen der Ausführungsform der Figur 9 ausgestaltet, also einfach in Form eines T in Draufsicht in Z-Richtung auf den Meßhilfskörper 33'.

Sowohl die in Draufsicht teilkreisförmige Abrundung des Meßhilfskörpers 33' als auch die verdickte Ausführungsform 34 bei dem Meßhilfskörper nach Figur 9 bestimmt eine Außenkontur, durch welche drei Mittelpunkte ausgemessen werden können. Aus den Raumkoordinaten dieser drei Mittelpunkte kann man dann wieder eindeutig die Lage des Halteelementes 26 bestimmen. Alternativ kann man anstelle der Mittelpunkte auch Markierungen 35 an den Schenkelenden anbringen, wie bei dem Meßhilfskörper 33' der Figur 9a angedeutet ist.

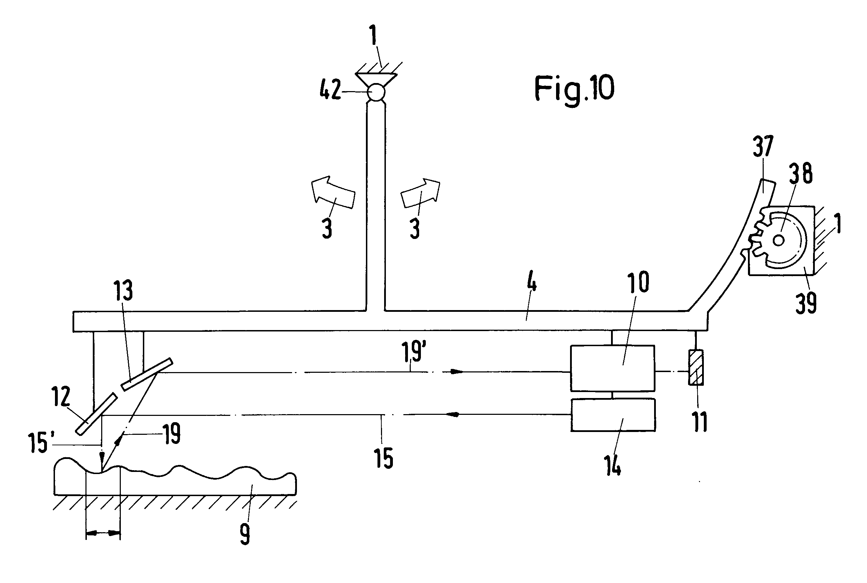

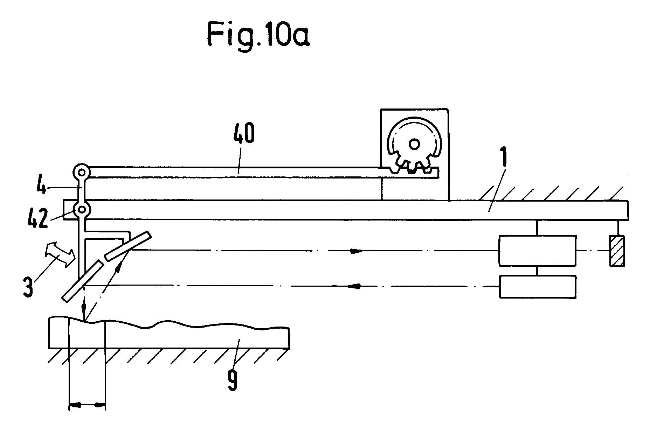

Figur 10 zeigt eine andere Ausführungsform für die Anwendung der Vorrichtung für das Lichtschnittverfahren. Hier kann auch auf Figur 4 Bezug genommen werden.

Der Träger 4 ist über den Drehpunkt 42 im Grundgestell 1 gelagert. Entsprechend führt er eine Drehbewegung gemäß der zwei in entgegengesetzter Richtung zeigenden Pfeile 3 aus. Der Antrieb wird hier über ein Zahnsegment 37 ausgeführt, welches mit dem Träger 4 fest verbunden ist. In dieses Zahnsegment 37 greift das Ritzel 38 eines Getriebemotors 39 ein. Der Getriebemotor 39 ist vorzugsweise als Schrittmotor mit Untersetzungsgetriebe ausgeführt, kann aber auch ein Servomotor mit Untersetzungsgetriebe sein. Motor 39 ist ebenfalls am Grundgestell 1 befestigt.

Die Umlenkeinrichtung führt eine Bewegung auf einem Kreisbogen um den Drehpunkt 42 aus, so daß sich bei den gezeigten geometrischen Verhältnissen auch der Abstand zum Objekt 9 ändert. Das ist nicht nachteilig, wenn nur ein kleiner Bereich (am Objekt 9 mit dem Doppelpfeil links unten angedeutet) ausgemessen werden soll, beispielsweise ein einzelner Zahn. Der erforderliche Schwenkwinkel des Trägers 4 wäre nur klein, entsprechend gering auch die Abstandsänderung der Umlenkeinrichtung zur Objektoberfläche.

Da zudem aufgrund der bekannten Geometrieverhältnisse die Bewegung der Umlenkeinrichtung 12, 13 in dieser Richtung bekannt ist, kann sie problemlos bei der Auswertung der Bildinformationen rechnerisch kompensiert werden.

In Figur 10a ist eine weitere andere Ausführungsform dargestellt, bei der ebenfalls die Umlenkeinrichtung eine Drehbewegung ausführt. Über das Grundgestell 1, welches hier eine ortsfeste längliche Stange ist, wird der Drehpunkt 42 ganz nah an die Umlenkeinheit herangeführt. Der Träger 4 ist nur noch ein kleiner, kurzer Hebel, welcher die Umlenkeinrichtung trägt. Der Antrieb erfolgt über eine Schubstange 43, die analog zu Figur 10 über einen Getriebemotor angetrieben wird.

## Patentansprüche

1. Vorrichtung zum berührungslosen Vermessen eines schlecht zugänglichen, dreidimensionalen Objektes (9) auf optischem Wege unter Erstellung von flächigen Aufnahmen, mit einer optischen Strahlquelle (14), einer Aufnahmeeinheit (10, 11) zur Aufzeichnung von optischen Strahlen (15, 18, 19, 25) und einer Auswerteeinheit (11a) zur Auswertung der durch die optischen Strahlen übermittelten Informationen, dadurch gekennzeichnet, daß
a) ein Träger (4) auf wenigstens einer Führungseinrichtung (2) relativ zum Objekt (9) auf einer Führungsbahn (3) gegenüber dem Grundgestell (1) bewegbar ist;
b) der Träger auf der/den Führungseinrichtung/en (2) mit Hilfe wenigstens eines Aktuators (7) verfahrbar ist,
c) wenigstens eine Umlenkeinrichtung (12, 13, 13') an dem Träger (4) derart befestigt ist, daß wenigstens ein vom Objekt reflektierter optischer Strahl (18, 19, 25; 18', 19', 25') zur Aufnahmeeinheit (10, 11) gelenkt wird;
d) daß Position und Richtung des Grundgestells (1) zum Objekt (9) zu jedem während der Aufnahme relevanten Zeitpunkt eindeutig bestimmt ist;
e) daß die Position und Ausrichtung des Trägers (4) gegenüber dem Grundgestell (1) zu jedem während der Aufnahme relevanten Zeitpunkt eindeutig bestimmt ist;
f) daß die Auswerteeinheit (11a) Einrichtungen zur Speicherung der Informationen der vom Objekt (9) reflektierten Strahlen (18', 19', 25') in Form von Bildpunkten und/oder Bildlinien und/oder Bildflächen aufweist; und
g) daß die Auswerteeinheit (11a) Einrichtungen zur Verarbeitung der gespeicherten Bildinformationen aufweist.

2. Vorrichtung nach Anspruch 1, dadurch gekennzeichnet, daß die Führungsbahn (3) geradlinig als verdrehgesicherte Linearführung (2) und der Träger (4) als Linearschlitten ausgebildet ist.

3. Vorrichtung nach Anspruch 1, dadurch gekennzeichnet, daß die Führungsbahn (3) kreisförmig und der Träger (4) als Schwenkklappe ausgebildet ist.

4. Vorrichtung nach einem der Ansprüche 1 bis 3, dadurch gekennzeichnet, daß mindestens eine weitere Umlenkeinrichtung (22) vorgesehen ist für das oszillierende Ablenken des vom Objekt (9) reflektierten optischen Strahles (18', 19', 25') in einer weiteren Raumrichtung und für das Projizieren desselben in die Aufnahmeeinheit (10, 11).

5. Vorrichtung nach Anspruch 4, dadurch gekennzeichnet, daß ein Drehspiegel (22) vorgesehen ist zur Umlenkung des vom Objekt (9) reflektierten optischen Strahles (18', 19', 25') und daß der Drehspiegel (22) am Träger (4) derart befestigt ist, daß die Drehachse (23) des Drehspiegels (22) orthogonal zur Bewegungsrichtung (3) des Trägers (4) liegt.

6. Vorrichtung nach einem der Ansprüche 1 bis 5, dadurch gekennzeichnet, daß
a) wenigstens eine Umlenkeinrichtung für wenigstens zwei unter einem Winkel zueinander vom Objekt (9) reflektierte Strahlen (18, 19, 25) vorgesehen ist;
b) wenigstens eine Aufnahmeeinheit (10, 11) vorgesehen ist, welche die Informationen aus den wenigstens zwei getrennten Strahlen (18', 19', 25') an die Auswerteeinheit (11a) übermittelt, und
c) die Auswerteeinheit (11a) Einrichtungen zur Bildung einer 3D-Information aus wenigstens zwei flächigen Aufnahmen aufweist.

7. Vorrichtung nach einem der Ansprüche 1 bis 6, dadurch gekennzeichnet, daß die Aufnahmeeinheit (10, 11) in der Höhe und/oder im Winkel beweglich einstellbar ist.

8. Vorrichtung nach einem der Ansprüche 1 bis 7, gekennzeichnet durch eine Einrichtung zur Ausbildung der von der wenigstens einen Strahlquelle (14) zum Objekt (9) gerichteten optischen Strahlen (15) für die Erzeugung von zusätzlichen Informationen bei der Auswertung der Aufnahmen.

9. Vorrichtung nach Anspruch 8, gekennzeichnet durch eine weitere Umlenkeinheit (12, 13, 13', 22, 36) zur Umlenkung des optischen Strahles (15, 15') in wenigstens einer Ebene.

10. Vorrichtung nach Anspruch 8, dadurch gekennzeichnet, daß zwischen der Strahlquelle (14) und dem Objekt (9) ein Raster (17) angeordnet ist (Figuren 2, 2a).

11. Vorrichtung nach Anspruch 8, gekennzeichnet durch eine an einem weiteren Träger (4) befestigte Umlenkeinrichtung (12, 13, 13') zum Richten des optischen Strahles (15, 15') zum Objekt (9), wobei der weitere Träger (4) auf einer weiteren Bahn (3) getrennt verfahrbar ist.

12. Vorrichtung nach Anspruch 8, gekennzeichnet durch eine Umlenkeinrichtung (12, 13, 13') zum Richten des optischen Strahles (15, 15') zum Objekt (9), wobei die Umlenkeinrichtung (12, 13, 13') an dem Träger (4) für die Aufnahme-Umlenkeinrichtung befestigt ist und gemeinsam mit dieser verfahrbar ist.

13. Vorrichtung nach Anspruch 8, dadurch gekennzeichnet, daß der Drehspiegel (22) für die Umlenkung des optischen Strahls (15') am Träger (4) derart befestigt ist, daß die Drehachse (23) des Drehspiegels (22) orthogonal zur Bewegungsrichtung (3) des Trägers (4) liegt.

14. Vorrichtung nach Anspruch 8, dadurch gekennzeichnet, daß die Strahlquelle (14) zur Erzeugung eines in einer Ebene aufgeweiteten optischen Strahls (15) vorgesehen ist und die Umlenkeinrichtung (12, 13, 13') für das Richten des linienförmig am Objekt (9) reflektierten Strahles (15) in die eine Flächenkamera aufweisende Aufnahmeeinheit (10, 11) ausgebildet ist (Figuren 4, 4a, 5).

15. Vorrichtung nach einem der Ansprüche 1 bis 14, dadurch gekennzeichnet, daß die Umlenkeinrichtung (12, 13, 13') wenigstens einen am Träger (14) befestigten Planspiegel aufweist.

16. Vorrichtung nach einem der Ansprüche 1 bis 15, dadurch gekennzeichnet, daß die Umlenkeinrichtung (12, 13, 13') zwei unter unterschiedlichem Winkel an einem Träger (4) befestigte Planspiegel aufweist (Figur 3).

17. Vorrichtung nach Anspruch 15, dadurch gekennzeichnet, daß die Strahlrichtung der optischen Quelle (14) unter einem Winkel zur optischen Achse der Aufnahmeeinheit (10, 11) festgelegt ist (Figur 5).

18. Vorrichtung nach einem der Ansprüche 8 bis 17, dadurch gekennzeichnet, daß die Auswerteeinheit (11a) Einrichtungen zur Bildung einer 3D-Information aus der gerichteten optischen Bestrahlung (15) des Objektes aufweist.

19. Verwendung der Vorrichtung nach einem der Ansprüche 1 bis 18 zum berührungslosen Vermessen von wenigstens einem Zahn (27) eines Gebisses und/oder von Lage und/oder Form wenigstens eines auf dem Zahn (27) aufgebrachten Halteelementes (26) für orthodontische Drähte, sogenannte Brackets (Figur 8).

20. Verwendung nach Anspruch 19, dadurch gekennzeichnet, daß wenigstens eine Markierung (31) an der Oberfläche des Halteelementes (26) angebracht ist (Figuren 8a, 8b).

21. Vorrichtung nach Anspruch 19 oder 20, dadurch gekennzeichnet, daß ein mit geeigneten Maßen (H) und Oberflächen versehener Meßhilfskörper (33, 33') zum Einsetzen in die Mittelnut (29) des Halteelementes (26) vorgesehen ist (Figuren 9, 9a).
